# EUROPEAN PATENT APPLICATION

(11) **EP 1 571 023 A1**
(43) Date of publication of application: **07.09.2005**
(21) Application number: 05003778.7
(22) Date of filing: 22.02.2005
(51) Int. Cl.: B60H 1/32, F25B 49/02

(54) **Engine-operated or electrically-operated air conditioner and control method for the same**

(30) Priority: 25.02.2004 KR 2004012584
(71) Applicant: LG ELECTRONICS INC., Seoul 150-010 (KR)
(72) Inventor: Oh, Sai Kee, Yangchun-ku Seoul 158-070 (KR); Chang, Se Dong, Kwangmyung-si Kyungki-do 423-060 (KR)
(74) Representative: TER MEER - STEINMEISTER & PARTNER GbR

(57) **Abstract**

Disclosed herein are an engine-operated or electrically-operated air conditioner and a control method for the same. The air conditioner is configured so that a compressor (50) thereof is driven by selectively using a driving force transmitted from an electric motor (60) or a driving force transmitted from an engine (70) according to an operational frequency of the compressor, thereby reducing fuel costs as well as ensuring high operational efficiency of the compressor and good cooling/heating performance of the air conditioner, as a result of integrating advantages of electrically-operated and engine-operated compressors.

## Description

### BACKGROUND OF THE INVENTION

### Field of the Invention

The present invention relates to an air conditioner using a refrigeration cycle device, and more particularly, to an air conditioner capable of selectively driving an engine or electric motor according to a load degree of a compressor and a control method for the same.

### Description of the Related Art

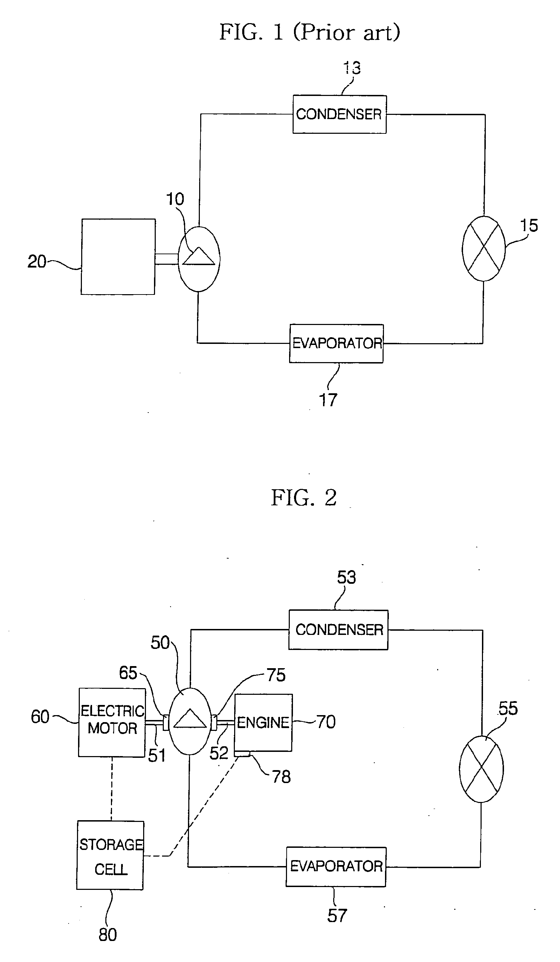

FIG. 1 is a schematic diagram illustrating a refrigeration cycle of an air conditioner having a conventional compressor driving structure.

As shown in FIG. 1, a refrigeration cycle device of the air conditioner comprises a compressor 10 that supplies a high-pressure and high-temperature gas refrigerant, and a condenser 13, expander 15 and evaporator 17 which are successively connected to the compressor 10.

More particularly, in the case of a domestic air conditioner, the compressor 10 is mainly a compressor of the type that a compression mechanism and electric motor 20 are mounted within a high-pressure shell so as to be driven using a commercial power source. In the case of a gas engine-operated air conditioner or automobile air conditioner, the compressor 10 is mainly a compressor of the type that a gas, diesel or gasoline engine is connected to a shaft of a compression mechanism to perform compression of a refrigerant.

Operation of the air conditioner using the engine-operated compressor is advantageous to reduce fuel costs and apply exhaust heat to heating, and the air conditioner using the electrically-operated compressor is advantageous for convenient maintenance.

However, the engine-operated compressor has a problem in that it achieves only low engine operational efficiency in its low load region that a compression RPM, i.e. an operational frequency of the compressor, is low and suffers from greater exhaust gas, although this kind of compressor exhibits a high engine operational efficiency and good exhaust performance in a high load region where the operational frequency of the compressor is high.

The electrically-operated compressor also has a problem in that it is difficult to attain variable-speed control using a constant-speed motor. However, a variable-speed motor tends to excessively increase electricity input, i.e. consumption electricity in the high load region of the compressor.

### SUMMARY OF THE INVENTION

Therefore, the present invention has been made in view of the above problems, and it is an object of the present invention to provide an engine-operated or electrically-operated air conditioner in which both an engine and electric motor are provided to be selectively used to operate a compressor according to an operational load range of the compressor, thereby improving operational efficiency of the compressor and reducing maintenance costs of the air conditioner, and to provide a control method for the same.

In accordance with one aspect of the present invention, the above and other objects can be accomplished by the provision of an engine-operated or electrically-operated air conditioner comprising: a refrigeration cycle device including a compressor, condenser, expander and evaporator; an electric motor that supplies a driving force to drive the compressor; an engine that supplies a driving force to drive the compressor; and a power-transmission selecting mechanism to select a driving source to drive the compressor from among the electric motor and the engine.

Preferably, the power-transmission selecting mechanism may include a pair of clutch mechanisms provided, respectively, between the compressor and the electric motor and between the compressor and the engine to selectively intercept power transmission.

Preferably, the electric motor and the engine may be connected to respective shafts extending from opposite sides of the compressor by interposing the clutch mechanisms, respectively.

Preferably, the electric motor may be connected to a storage cell so as to drive using electricity generated by the driving force of the engine.

In accordance with another aspect of the present invention, the above and other objects can be accomplished by the provision of a control method for an engine-operated or electrically-operated air conditioner wherein a compressor of the air conditioner is driven by selectively using a driving force transmitted from an electric motor or a driving force transmitted from an engine, according to an operational frequency of the compressor.

Preferably, the compressor may be driven by using the electric motor in a low load region that the operational frequency of the compressor is lower than a predetermined operational frequency, and may be driven by using the engine in a high load region that the operational frequency of the compressor is higher than the predetermined operational frequency.

Preferably, the compressor may be driven by using the electric motor upon initial operation of the compressor.

Preferably, the compressor may be driven by using the engine when revolutions per minute (RPM) of the engine belongs within a predetermined RPM range in the high load region of the compressor.

With such an engine-operated or electrically-operated air conditioner and a control method for the same according to the present invention, the compressor is driven by selectively using the electric motor or engine as a driving source, thereby ensuring high operational efficiency and good cooling/heating performance as a result of integrating advantages of electrically-operated and engine-operated compressors. Further, the high operational efficiency of the compressor has the effect of reducing the amount of energy required to drive the compressor, resulting in low maintenance costs of the air conditioner.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a schematic diagram illustrating a refrigeration cycle of an air conditioner having a conventional compressor driving structure;
FIG. 2 is a schematic diagram illustrating a refrigeration cycle of an engine-operated or electrically-operated air conditioner according to a preferred first embodiment of the present invention;
FIG. 3 is a schematic diagram illustrating a refrigeration cycle of an engine-operated or electrically-operated air conditioner according to a preferred second embodiment of the present invention;
FIG. 4 is a flow chart illustrating a control method for the engine-operated or electrically-operated air conditioner according to the present invention; and
FIG. 5 is a graph illustrating a fuel consumption rate, shaft torque and shaft output variation according to revolutions per minute of an engine.

### DESCRIPTION OF THE PREFERRED EMBODIMENTS

Now, preferred embodiments of an engine-operated or electrically-operated air conditioner and a control method for the same according to the present invention will be described in detail with reference to the annexed drawings.

FIG. 2 is a schematic diagram illustrating a refrigeration cycle of an engine-operated or electrically-operated air conditioner according to a preferred first embodiment of the present invention.

As shown in FIG. 2, the engine-operated or electrically-operated air conditioner according to the preferred first embodiment of the present invention includes a refrigeration cycle device comprised of a compressor 50, a condenser 53, an expander 55 and an evaporator 57, similar to a known refrigeration cycle. The compressor 50 is connected to both an electric motor 60 and engine 70 to receive a driving force therefrom.

The electric motor 60 is disposed aside the compressor 50 and is used to achieve rotational driving of the compressor 50 using a commercial power source. Such an electric motor 60 is connected to a driving mechanism of the compressor 50 via a shaft 51, thereby permitting compressing operation of the compressor 50 via power transmission.

The engine 70 is one selected from among gas, diesel, and gasoline engines. Similar to the electric motor 60, the engine 70 is connected to the driving mechanism of the compressor 50 via a shaft 52, thereby permitting compressing operation of the compressor 50 via power transmission.

The shaft 51 between the electric motor 60 and the compressor 50 and the shaft 52 between the engine 70 and the compressor 50 are provided, respectively, with clutch mechanisms 65 and 75. The clutch mechanisms 65 and 75 serve as power-transmission selecting mechanisms to selectively intercept power transmission to the compressor 50.

That is, both the electric motor 60 and the engine 70 are connected to the respective shafts 51 and 52 extending from opposite sides of the compressor 50, and the clutch mechanisms 65 and 75 are interposed, respectively, between the electric motor 60 and the compressor 50 and between the engine 70 and the compressor 50.

Here, the clutch mechanisms 65 and 75 are selectable from among known clutch systems of the type that power-transmission mechanisms thereof are connected to or disconnected from each other according to signals of a control unit.

Preferably, the electric motor 60 is electrically connected to a storage cell 80 that stores electricity generated in an engine generator 78. This permits the electric motor 60 to drive using the electricity generated upon driving of the engine 70.

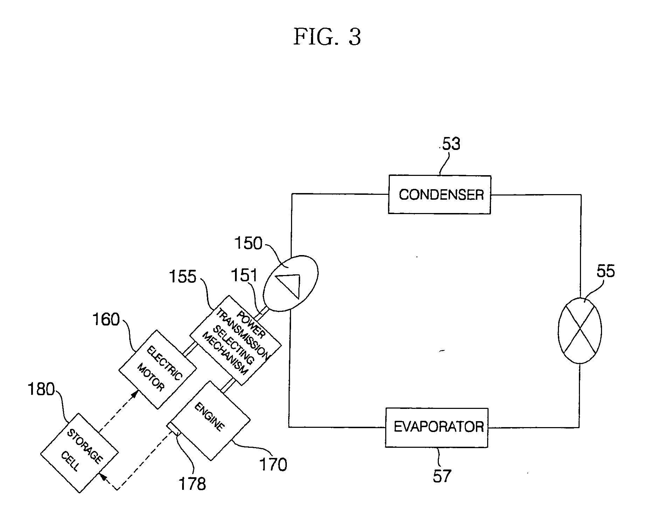

FIG. 3 is a schematic diagram illustrating a refrigeration cycle of an engine-operated or electrically-operated air conditioner according to a preferred second embodiment of the present invention.

As shown in FIG. 3, the engine-operated or electrically-operated air conditioner according to the preferred second embodiment of the present invention has a configuration basically similar to the configuration of the above described first embodiment except for a power-transmission structure from an electric motor 160 and engine 170 to a compressor 150.

In the second embodiment, the compressor 150 is internally connected to a single driving shaft 151 for power transmission from the electric motor 160 or engine 170, and a power-transmission selecting mechanism 155 is provided between the driving shaft 151 and both the electric motor 160 and engine 170 to selectively intercept power transmission from the engine 170 or electric motor 160.

Here, the power-transmission selecting mechanism 155 is selectable from among known mechanisms of the type that selectively connect the compressor to one of a plurality of power sources.

It is preferable that the electric motor 160 is connected to a storage cell 180 that stores electricity generated in an engine generator 178, so as to receive power therefrom, but is not limited thereto, and a general exterior commercial power source may be connected to the electric motor 160.

The constituent elements of the second embodiment, except for the above described power-transmission structure, respectively corresponding to those of the first embodiment are designated by the same reference numerals and no detailed description thereof will be given.

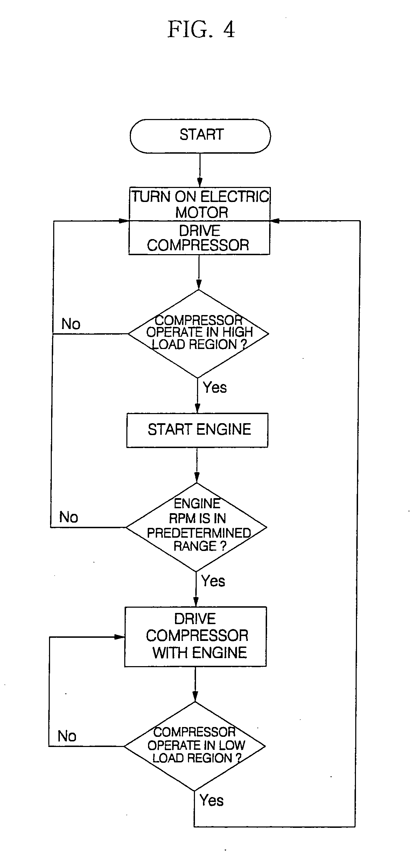

FIG. 4 is a flow chart illustrating a control method for the engine-operated or electrically-operated air conditioner according to the present invention. The control method is based on the first embodiment and thus will be described with reference to FIG. 2.

During an initial operating period of the compressor 50 or in a low load region where an operational frequency of the compressor 50 is lower than a predetermined operational frequency, the air conditioner, having both the engine 70 and the electric motor 60, operates the compressor 50 using the electric motor 60 as a driving source. On the other hand, in a high load region that the operational frequency of the compressor 50 is higher than the predetermined operational frequency, the air conditioner operates the compressor 50 using the engine 70 as a driving source.

In the high load region of the compressor 50, it is preferable to operate the compressor 50 using the engine 70 when revolutions per minute (RPM) of the engine 70 is in a predetermined range of 2000 to 3000 rpm, i.e. in an optimum operational region, in consideration of power-generation efficiency of the engine 70.

Here, it should be understood that the RPM range of the optimum operational region is changeable variously according to the efficiency and operational state of the engine.

In the first embodiment as stated above, since the electric motor 60 and the engine 70 are connected to the respective rotating shafts 51 and 52 extending from opposite sides of the compressor 50, the compressor 50 is able to be driven by selectively using the electric motor 60 in the low load region of the compressor 50 or the engine 70 in the high load region of the compressor 50. In the latter case, the engine 70 is also used to fill the storage cell 80 with electricity that will be used to drive the electric motor 60.

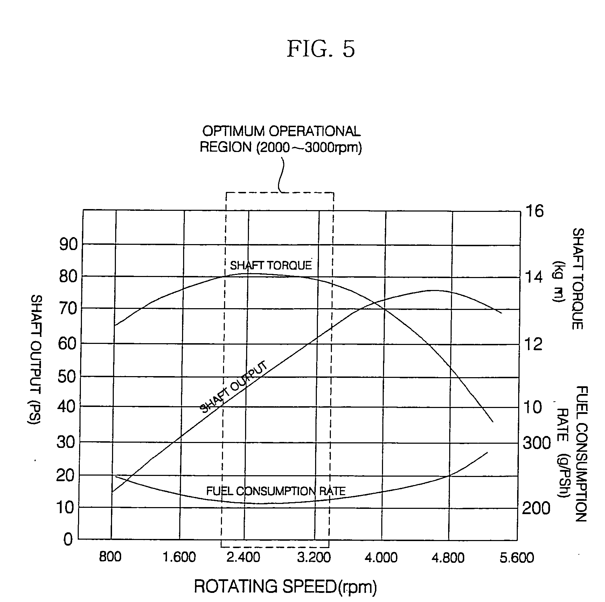

FIG. 5 is a graph illustrating a fuel consumption rate, shaft torque and shaft output variation according to revolutions per minute of the engine 70. The engine 70 has to rotate to 2000 to 3000 rpm in order to attain sufficient torque, but the electric motor 60 attains a maximum torque as soon as it rotates.

That is, when the electric motor 60 is a conventional inverter motor, it has an operational frequency band of 30 to 120 Hz and exhibits an optimum operational efficiency in a frequency band of 50 to 60 Hz. If the electric motor 60 operates beyond its optimum RPM range, electricity input dramatically increases, causing a high load operation of the compressor 50. This adversely affects the reliability of the compressor 50.

Therefore, in the high load region, i.e. high rotational region, of the compressor 50 having a frequency band of 2000 to 3000 rpm, the engine 70 is used to drive the compressor 50. The electric motor 60 is used only in the low load region, i.e. low rotational region, of the compressor 50.

Operating the compressor 50 using the electric motor 60 in the low rotational region and using the engine 70 in the high rotational region results in an increase in the driving efficiency of the compressor 50, thereby reducing the amount of energy required to drive the compressor 50, i.e. fuel consumption rate.

Especially, in the case of a large-scale air conditioner, it is known that such a large-scale air conditioner requires a greater number of electric motors 60 to drive the compressor 50 due to an increased power supply capacity. However, since the present invention permits the compressor to be driven by using the engine 70 as an independent power source if necessary, the required power supply capacity can be reduced, enabling more effective driving of large-scale compressors.

As apparent from the above description, the present invention provides an engine-operated or electrically-operated air conditioner and a control method for the same, which permit a compressor to be driven by selectively using an engine or electric motor, thereby ensuring high operational efficiency of the compressor and consequently good cooling/heating performance of the air conditioner as a result of integrating advantages of electrically-operated and engine-operated compressors. The high operational efficiency of the compressor has the effect of reducing the amount of energy required to drive the compressor, resulting in low maintenance costs of the air conditioner.

Although the preferred embodiment of the present invention have been disclosed for illustrative purposes, those skilled in the art will appreciate that various modifications, additions and substitutions are possible, without departing from the scope and spirit of the invention as disclosed in the accompanying claims.

## Claims

1. An engine-operated or electrically-operated air conditioner comprising:
a refrigeration cycle device including a compressor (50), condenser (53), expander (55) and evaporator (57);
an electric motor (60;160) that supplies a driving force to drive the compressor (50);
an engine (70;170) that supplies a driving force to drive the compressor (50); and
a power-transmission selecting mechanism (65 and 75; 155) to select a driving source to drive the compressor (50) from among the electric motor (60;160) and the engine (70;170).

2. The air conditioner as set forth in claim 1, wherein the power-transmission selecting mechanism includes a pair of clutch mechanisms (65 and 75) provided, respectively, between the compressor (50) and the electric motor (60) and between the compressor (50) and the engine (70) to selectively intercept power transmission.

3. The air conditioner as set forth in claim 2, wherein the electric motor (60) and the engine (70) are connected to respective shafts (51 and 52) extending from opposite sides of the compressor (50) by interposing the clutch mechanisms (65 and 75), respectively.

4. The air conditioner as set forth in claim 1, wherein the electric motor (60) is connected to a storage cell (80) so as to drive using electricity generated by the driving force of the engine (70).

5. A control method for an engine-operated or electrically-operated air conditioner wherein
a compressor (50) of the air conditioner is driven by selectively using a driving force transmitted from an electric motor (60) or a driving force transmitted from an engine (70), according to an operational frequency of the compressor (50).

6. The control method as set forth in claim 5, wherein:
the compressor (50) is driven by using the electric motor (60) in a low load region that the operational frequency of the compressor (50) is lower than a predetermined operational frequency; and
the compressor (50) is driven by using the engine (70) in a high load region that the operational frequency of the compressor (50) is higher than the predetermined operational frequency.

7. The control method as set forth in claim 5, wherein:
the compressor (50) is driven by using the electric motor (60) in a low load region that the operational frequency of the compressor (50) is lower than a predetermined operational frequency; and
the compressor (50) is driven by using the engine (70) in a high load region that the operational frequency of the compressor (50) is higher than the predetermined operational frequency,
the compressor (50) is driven by using the electric motor (60) upon initial operation of the compressor (50).

8. A control method for an engine-operated or electrically-operated air conditioner wherein:
a compressor (50) of the air conditioner is driven by using an electric motor (60) in a low load region that an operational frequency of the compressor (50) is lower than a predetermined operational frequency, and the compressor (50) is driven by using an engine (70) in a high load region that the operational frequency of the compressor (50) is higher than the predetermined operational frequency; and
the compressor (50) is driven by using the engine (70) when revolutions per minute (RPM) of the engine (70) belongs within a predetermined RPM range in the high load region of the compressor (50).
